# EUROPEAN PATENT APPLICATION

(11) **EP 4 614 890 A1**
(43) Date of publication of application: **10.09.2025**
(21) Application number: 22963785.5
(22) Date of filing: 31.10.2022
(51) Int. Cl.: H04L 27/00

(54) **COMMUNICATION METHOD AND APPARATUS, DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Hersina, Günter
(86) International application number: PCT/CN2022/128796
(87) International publication number: WO 2024/092466

(57) **Abstract**

Embodiments of the present disclosure relate to the technical field of communications, and provide a communication method and apparatus, a device, and a storage medium. The method can be applied to a first AP device and comprises: determining a target frequency interval, wherein the target frequency interval is the maximum frequency interval in minimum frequency intervals between simultaneous transmit and receive (STR) links supported by each STA device in an OBSS, the OBSS is an overlapping portion of basic service sets (BSS) formed by at least one AP device in a sub-7 GHz frequency band, and the first AP device is any one of the at least one AP device; and according to the target frequency interval, communicating with at least one associated STA device in the OBSS, wherein the minimum frequency interval between communication links when any two STA devices in the OBSS are in communication with the associated AP devices is greater than or equal to the target frequency interval. According to the embodiments of the present disclosure, communication between the AP devices and the STA devices in the OBSS can be coordinated.

## Description

### TECHNICAL FIELD

The present disclosure relates to the technical field of communications, and in particular to a communication method and apparatus, a device, and a storage medium.

### BACKGROUND

With continuous development of wireless fidelity (Wi-Fi) technology, researchers have proposed a next-generation Wi-Fi technology: ultra high reliability (UHR). Its vision is to enhance reliability of a wireless local area network (WLAN) connection, decrease latency, improve manageability, increase system throughput, and reduce power consumption of a corresponding device. A UHR technology enables device communication in at least a sub-7 GHz frequency band. When a device requires high-throughput communication, simultaneous communication in a sub-7 GHz frequency band, a 45 GHz frequency band, and a 60 GHz frequency band is allowed.

A plurality of access point (AP) devices form an overlapping basic service set (OBSS) in a range of the sub-7 GHz frequency band. When station (STA) devices in the OBSS simultaneously communicate with their associated AP devices, simultaneously transmit and receive (STR) links are used for communication. However, frequency overlapping may occur in the STR links, which affects communication between the STA devices and the AP devices. Therefore, it is necessary to coordinate communication between various AP devices and STA devices in the OBSS.

### SUMMARY

Embodiments of the present disclosure provide a communication method and apparatus, a device, and a storage medium, for coordinating communication between AP devices and STA devices in an OBSS.

According to a first aspect, the embodiments of the present disclosure provide a communication method, applied to a first AP device, including:
determining a target frequency separation, in which the target frequency separation is a maximum frequency separation among minimum frequency separations between simultaneous transmit and receive (STR) links supported by each station (STA) device in an overlapping basic service set (OBSS), the OBSS is an overlapping part of basic service sets (BSSs) formed by at least one AP device in a sub-7 GHz frequency band, and the first AP device is any one of the at least one AP device; and
communicating with at least one STA device in the OBSS according to the target frequency separation, in which a minimum frequency separation between communication links of any two STA devices in the OBSS when communicating with an associated AP device is greater than or equal to the target frequency separation.

According to a second aspect, the embodiments of the present disclosure provide a communication method, applied to a third STA device, including:
sending first indication information, in which the first indication information is used for enabling an associated AP device to determine a target frequency separation according to the first indication information and to communicate with at least one associated STA device in an OBSS according to the target frequency separation, the target frequency separation is a maximum frequency separation among minimum frequency separations between STR links supported by each STA device in the OBSS, the OBSS is an overlapping part of BSSs formed by at least one AP device in a sub-7 GHz frequency band, the third STA device is any STA device in the OBSS, and a minimum frequency separation between communication links of any two STA devices in the OBSS when communicating with an associated AP device is greater than or equal to the target frequency separation.

According to a third aspect, the embodiments of the present disclosure provide a communication apparatus, applied to a first AP device, including:
a determining unit, configured to determine a target frequency separation, in which the target frequency separation is a maximum frequency separation among minimum frequency separations between STR links supported by each STA device in an OBSS, the OBSS is an overlapping part of BSSs formed by at least one AP device in a sub-7 GHz frequency band, and the first AP device is any one of the at least one AP device; and
a first communicating unit, configured to communicate with at least one STA device in the OBSS according to the target frequency separation, in which a minimum frequency separation between communication links of any two STA devices in the OBSS when communicating with an associated AP device is greater than or equal to the target frequency separation.

According to a fourth aspect, the embodiments of the present disclosure provide a communication apparatus, applied to a first AP device, including:
a second communicating unit, configured to send first indication information, in which the first indication information is used for enabling an associated AP device to determine a target frequency separation according to the first indication information and to communicate with at least one associated STA device in an OBSS according to the target frequency separation, the target frequency separation is a maximum frequency separation among minimum frequency separations between STR links supported by each STA device in the OBSS, the OBSS is an overlapping part of BSSs formed by at least one AP device in a sub-7 GHz frequency band, the third STA device is any STA device in the OBSS, and a minimum frequency separation between communication links of any two STA devices in the OBSS when communicating with an associated AP device is greater than or equal to the target frequency separation.

According to a fifth aspect, the embodiments of the present disclosure provide an AP device, including a memory, a processor, and a computer program stored on the memory and executable on the processor, in which when the program is executed by the processor, the communication method in the first aspect of the embodiments of the present disclosure is implemented.

According to a sixth aspect, the embodiments of the present disclosure provide an STA device, including a memory, a processor, and a computer program stored on the memory and executable on the processor, in which when the program is executed by the processor, the communication method in the second aspect of the embodiments of the present disclosure is implemented.

According to a seventh aspect, the embodiments of the present disclosure provide a computer readable storage medium for storing a computer program, in which when the computer program is executed by a processor, any one of communication methods of the embodiments of the present disclosure is implemented.

The embodiments of the present disclosure provide a method for coordinating communication between AP devices corresponding to the OBSS and corresponding STA devices in the OBSS when a plurality of AP devices form the OBSS in a range of a sub-7 GHz frequency band.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

In order to clearly illustrate technical solutions of embodiments of the present invention, a brief description of accompanying drawings used in embodiments is given below. Obviously, the accompanying drawings in the following descriptions are only part embodiments of the present disclosure, and for those skilled in the art, other drawings may be obtained according to these accompanying drawings without creative labor.
FIG. 1 is a flowchart of a communication method according to the embodiments of the present disclosure.
FIG. 2 is a first schematic diagram of a first example according to the embodiments of the present disclosure.
FIG. 3 is a second schematic diagram of a first example according to the embodiments of the present disclosure.
FIG. 4 is a schematic diagram of a scenario of an OBSS according to the embodiments of the present disclosure.
FIG. 5 is another flowchart of a communication method according to the embodiments of the present disclosure.
FIG. 6 is a block diagram of a communication apparatus according to the embodiments of the present disclosure.
FIG. 7 is another block diagram of a communication apparatus according to the embodiments of the present disclosure.
FIG. 8 is a block diagram of an electronic device according to the embodiments of the present disclosure.

### DETAILED DESCRIPTION

In the present disclosure, the term "and/or" describes a relationship between associated objects, indicating that there may be three relationships, for example, A and/or B may represent: A alone, A and B at the same time, and B alone. The character "/" generally indicates that a relationship between associated objects is an "or" relationship.

In the embodiments of the present disclosure, the term "a plurality of" means two or more. Other quantifiers are similar to this term.

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the present disclosure. Instead, they are merely examples of apparatuses and methods consistent with some aspects related to the present disclosure as detailed in the appended claims.

The terms used in embodiments of the present disclosure are solely for the purpose of describing a particular embodiment and are not intended to limit embodiments of the present disclosure. The terms "a/an" and "the" in a singular form used in embodiments and claims of the present disclosure are also intended to include a plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited by these terms. These terms are only used to distinguish between information in the same type. For example, without departing from the scope of embodiments of the present disclosure, the first information may also be referred to as the second information, and similarly, the second information may be referred to as the first information. Depending on the context, words "if" and "in case that" used here may be interpreted as "when", "while", or "in response to determining...".

Technical solutions in embodiments of the present disclosure will be clearly and completely described below with reference to the accompanying drawings in embodiments of the present disclosure. Obviously, the embodiments described here are only part of the embodiments of the present disclosure and are not all embodiments of the present disclosure. Based on the embodiments of the present disclosure, other embodiments obtained by those skilled in the art without creative labor are within the scope of the present disclosure.

The method and the apparatus are based on a same inventive concept, and since the method and the device solve the problem in a similar principle, therefore, implementations of the apparatus and the method may be referred to each other, which will not be repeated.

An AP device may be a wireless switch for a wireless network, and also serves as an access device for the wireless network. The AP device may include a software application and/or circuit to enable other types of nodes in the wireless network to communicate with outside and inside of the wireless network via the AP device. As an example, the AP device may be a terminal or a network device equipped with a Wi-Fi chip.

A STA device may specifically include but is not limited to: a cellular phone, a smart phone, a wearable device, a computer, a personal digital assistant (PDA), a personal communication system (PCS) device, a personal information manager (PIM), a personal navigation device (PND), a global positioning system, a multimedia device, an Internet of Things (IoT) device, etc.

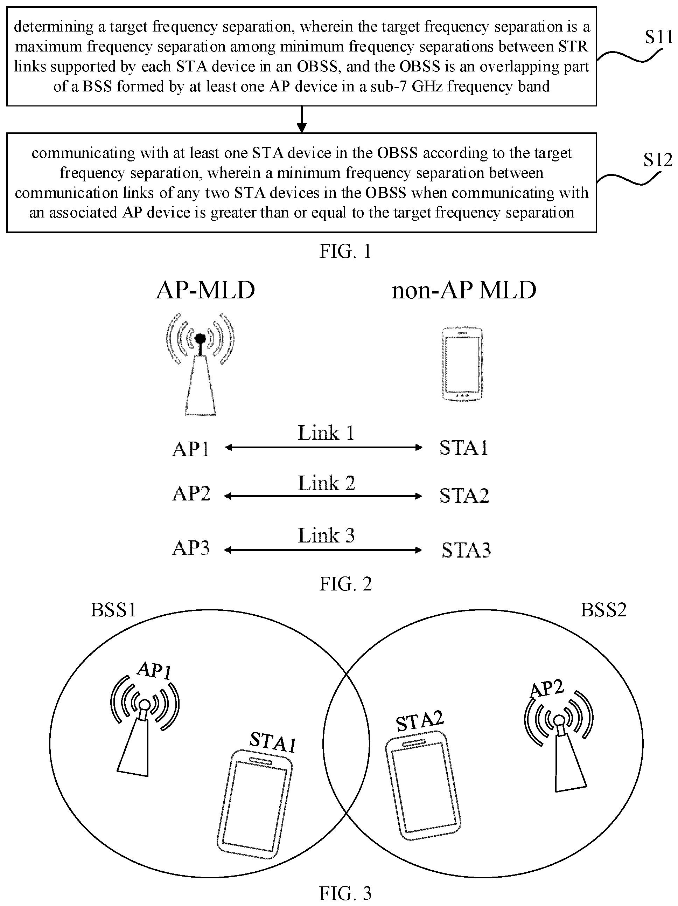

The embodiments of the present disclosure provide a communication method, applied to a first AP device. Details can be referred to FIG. 1, which is a flowchart of a communication method according to the embodiments of the present disclosure.

Optionally, the method may include S11.

At S11, a target frequency separation is determined, in which the target frequency separation is a maximum frequency separation among minimum frequency separations between STR links supported by each STA device in an OBSS, the OBSS is an overlapping part of BSSs formed by at least one AP device in a sub-7 GHz frequency band.

In the embodiments of the present disclosure, the first AP device is any one of all AP devices corresponding to the OBSS.

Each AP device forms its own BSS in the range of the sub-7 GHZ frequency band. When there is an overlapping part in BSSs of a plurality of AP devices, the overlapping part will be determined as the OBSS in the embodiments of the present disclosure.

In a WLAN, one BSS may consist of an AP device and one or more STAs that communicate with the AP device. One BSS may be connected to a distribution system (DS) via its AP device, and then to another BSS to form an extended service set (ESS).

Optionally, the AP device may be a device with a wireless-to-wired bridging function, and the AP device is responsible for extending a service provided by a wired network to a wireless network. The STA device may be an electronic device with a wireless network access function, provide a frame delivery service to enable information transmission.

In the embodiments of the present disclosure, any AP device corresponding to the OBSS and the STA device in the OBSS may be multi-link devices (MLDs), for example, may be represented as an AP MLD and a non-AP MLD respectively.

As a first example, referring to FIG. 2 and FIG. 3, an AP MLD may represent an AP device that supports a multi-link communication function, and the non-AP MLD may represent a STA device that supports the multi-link communication function.

Referring to FIG. 2, the AP MLD may include three affiliated AP devices: AP1, AP2, and AP3 as shown in FIG. 2. Each AP device may respectively operate on a link 1, a link 2, and a link 3. The non-AP MLD may also include three affiliated STA devices: STA1, STA2, and STA3 as shown in FIG. 2. The STA1 operates on the link 1, the STA2 operates on the link 2, and the STA3 operates on the link 3. In FIG. 3, the AP1 and the STA1 form a BSS1, and the AP2 and the STA2 form a BSS2. In an example in FIG. 2, assuming that the AP1 communicates with the STA1 via a corresponding link 1, similarly, the AP2 communicates with the STA2 via a corresponding link 2, and the AP device communicates with the STA3 via the link 3. In addition, the link 1 to the link 3 may be a plurality of links at different frequencies, for example, a link at 2.4GHz, 5GHz, or 6GHz, or several links at 2.4GHz with a same or different bandwidths. In addition, a plurality of channels may exist in each link. It may be understood that a communication scenario shown in FIG. 2 is only illustrative and is not limited to the present disclosure. For example, the AP MLD may be connected to a plurality of (three) non-AP MLDs, or in each link, the AP device may communicate with a plurality of other types of STA devices.

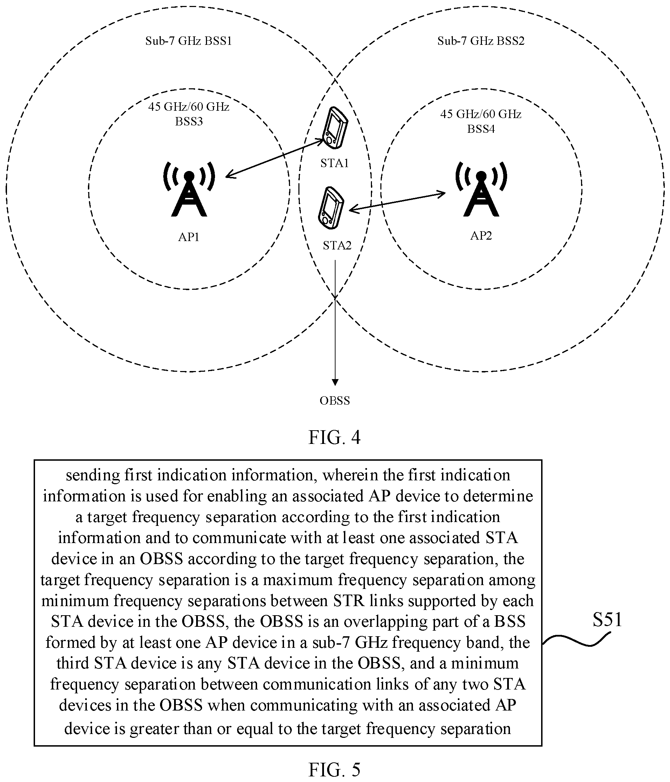

As shown in FIG. 4, which is a schematic diagram of a scenario of an OBSS according to the embodiments of the present disclosure. An AP1 forms a BSS1 in the range of the sub-7 GHZ frequency band, and an AP2 forms a BSS2 in the range of the sub-7 GHZ frequency band. An overlapping part of the BSS1 and the BSS2 is the OBSS. The AP1 and the AP2 respectively form a BSS3 and a BSS4 in a range of a 45 GHz frequency band or a range of a 60 GHz frequency band, and the BSS3 and the BSS4 do not overlap.

The STA1 and the STA2 are both located in the OBSS. The STA1 establishes a communication link with the AP1 for communication, and the STA2 establishes a communication link with the AP2 for communication.

In the embodiments of the present disclosure, for the first AP device (i.e., any AP device corresponding to the OBSS), the first AP device determines the maximum frequency separation among the minimum frequency separations between the STR links supported by each STA device in the OBSS, and determines the maximum frequency separation as the target frequency separation.

At S12, the first AP communicates with at least one STA device in the OBSS according to the target frequency separation, in which a minimum frequency separation between communication links of any two STA devices in the OBSS when communicating with associated AP device(s) is greater than or equal to the target frequency separation.

After determining the target frequency separation, the first AP device may communicate with any one or more associated STA devices in the OBSS according to the target frequency separation. Each AP device corresponding to the OBSS may independently determine the target frequency separation and communicate with any one or more associated STA devices in the OBSS according to the target frequency separation, thereby ensuring that the minimum frequency separation between the communication links of any two STA devices in the OBSS when communicating with the associated AP device(s) is greater than or equal to the target frequency separation, which effectively reduces inter-link interference.

Optionally, the communication links of any two STA devices in the OBSS when communicating with the associated AP device(s) may be STR links with each other. That is, any two communication links form a STR link pair. When one STA device in the OBSS sends a frame to its associated AP device on one of the two communication links, the other STA device in the OBSS may receive a frame from its associated AP device on the other communication link.

In the communication method applied to the first AP device in the present disclosure, when the target frequency separation is determined, first indication information sent by the at least one STA device associated with the first AP device in the OBSS is received, and the target frequency separation is determined according to the at least one piece of first indication information.

The first indication information sent by each STA device associated with the first AP device in the OBSS includes at least one of:
at least one first identifier value, in which each first identifier value indicates a minimum frequency separation between STR links supported by all STA devices in the OBSS other than the STA device;
a second identifier value, in which the second identifier value indicates a maximum frequency separation among minimum frequency separations between STR links supported by all STA devices in the OBSS other than the STA device;
at least one third identifier value, in which each third identifier value indicates a minimum frequency separation between STR links supported by each STA device in the OBSS; or
a fourth identifier value, in which the fourth identifier value indicates a maximum frequency separation among minimum frequency separations between STR links supported by all STA devices in the OBSS.

The first AP device may determine the maximum frequency separation among the minimum frequency separations between the STR links supported by all STA devices in the OBSS based on first indication information sent by one or more STA devices associated with the first AP device in the OBSS, and determine the maximum frequency separation as the target frequency separation.

The first AP device may also determine the maximum frequency separation among the minimum frequency separations between the STR links supported by all STA devices in the OBSS based on the first indication information sent by one or more STA devices associated with the first AP device in the OBSS, and minimum frequency separations among the STR links supported by each STA device associated with the first AP device in the OBSS.

If any of above identifier values is a non-zero integer, assuming that an identifier value is n, a corresponding indicated frequency separation is (n - 1) * 80 MHz.

If a first identifier value is 3, a minimum frequency separation indicated by the first identifier value is (3 - 1) * 80 MHz = 160MHz. If a second identifier value is 4, a maximum frequency separation indicated by the second identifier value is (4 - 1) * 80 MHz = 240 MHz.

In the communication method applied to the first AP device in the present disclosure, the first indication information sent by each STA device associated with the first AP device in the OBSS includes the at least one first identifier value, and each first identifier value indicates the minimum frequency separation between the STR links supported by all STA devices in the OBSS other than the STA device.

In an optional embodiment, when the first AP device determines the target frequency separation based on the at least one piece of first indication information, the target frequency separation may be determined based on a maximum identifier value among all first identifier values included in first indication information sent by a first STA device and a seventh identifier value.

The first STA device is any STA device associated with the first AP device in the OBSS, and the seventh identifier value indicates a minimum frequency separation between STR links supported by the first STA device.

The seventh identifier value is sent by the first STA device to the first AP device in a process of establishing an association with the first AP device.

In the process of establishing the association with the first AP device, the first STA device sends a message frame to the first AP device, which includes a multi-link information element. The multi-link information element includes a Frequency Separation For STR information field, and the Frequency Separation For STR information field includes an identifier value indicating the minimum frequency separation between the STR links supported by the first STA device.

Assuming that the maximum identifier value among all first identifier values included in the first indication information sent by the first STA device and the seventh identifier value is k, the target frequency separation is (k - 1) * 80 MHz.

As an example, the AP1 and the AP2 form the OBSS. The OBSS includes a STA1 to a STA6, and the AP1 is associated with the STA1 to a STA3 in the OBSS, and the AP2 is associated with a STA4 to the STA6 in the OBSS.

The STA1 to the STA3 send first indication information to the AP1. The first indication information sent by each STA device includes a first identifier value indicating the minimum frequency separation between the STR links supported by every other STA device from the STA1 to the STA6 (excluding itself).

Taking the STA1 as the first STA device as an example, first indication information sent by the STA1 includes a plurality of first identifier values. Each first identifier value indicates a minimum frequency separation between STR links supported by one STA device among the STA2 to the STA6.

The AP1 may determine a maximum identifier value among the seventh identifier value indicating the minimum frequency separation between the STR links supported by the STR1 and above two first identifier values, and determine the target frequency separation based on the maximum identifier value.

In an optional embodiment, when the first AP device determines the target frequency separation based on the at least one piece of first indication information, the target frequency separation may be determined according to the maximum identifier value among all first identifier values included in first indication information sent by all STA devices associated with the first AP device in the OBSS.

Assuming that the maximum identifier value among all first identifier values included in the first indication information sent by all STA devices associated with the first AP device in the OBSS is k, the target frequency separation is (k - 1) * 80 MHz.

As an example, the AP1 and the AP2 form the OBSS. The OBSS includes the STA1 to the STA6. The AP1 is associated with the STA1 to the STA3 in the OBSS, and the AP2 is associated with the STA4 to the STA6 in the OBSS.

The STA1 to the STA3 send the first indication information to the AP1. The first indication information sent by each STA device includes the minimum frequency separation between the STR links supported by every other STA device in the STA1 to the STA6 (excluding itself).

In this case, all first identifier values in the first indication information sent by the STA1 to the STA3 to the AP1 include the first identifier value indicating the minimum frequency separation between the STR links supported by each STA device in the STA1 to the STA6. Therefore, the AP1 may determine a maximum identifier value among all first identifier values of the minimum frequency separation between the STR links supported by each STA device in the STA1 to the STA6 and determines the target frequency separation based on the maximum identifier value.

In the communication method applied to the first AP device in the present disclosure, the first indication information sent by each STA device associated with the first AP device in the OBSS includes the second identifier value, in which the second identifier value indicates the maximum frequency separation among the minimum frequency separations between the STR links supported by all STA devices in the OBSS other than the each STA device.

In an optional embodiment, when the first AP device determines the target frequency separation based on the at least one piece of first indication information, the target frequency separation may be determined based on the at least one piece of first indication information, the target frequency separation may be determined according to a maximum identifier value in a second identifier value included in first indication information sent by a second STA device and an eighth identifier value.

The second STA device is any STA device associated with the first AP device in the OBSS, and the eighth identifier value indicates a minimum frequency separation between the STR links supported by the first STA device.

The eighth identifier value is sent by the second STA device to the first AP device in a process of establishing an association with the first AP device.

In the process of establishing the association with the first AP device, the second STA device sends a message frame to the first AP device, which includes a multi-link information element. The multi-link information element includes a Frequency Separation For STR information field, and the Frequency Separation For STR information field includes an identifier value indicating the minimum frequency separation between STR links supported by the second STA device.

Assuming that the maximum identifier value in the second identifier value included in the first indication information sent by the second STA device and the eighth identifier value is k, the target frequency separation is (k - 1) * 80 MHz.

As an example, the AP1 and the AP2 form the OBSS. The OBSS includes the STA1 to the STA6. The AP1 is associated with the STA1 to the STA3 in the OBSS, and the AP2 is associated with the STA4 to the STA6 in the OBSS.

The STA1 to the STA3 send the first indication information to the AP1. The first indication information sent by each STA device includes a second identifier value indicating the maximum frequency separation between the STR links supported by every other STA device in the STA1 to the STA6 (excluding itself).

Taking the STA1 as the second STA device as an example, the first indication information sent by the STA1 includes a second identifier value. The second identifier value indicates a maximum frequency separation among minimum frequency separations between STR links supported by the STA2 to the STA6.

The AP1 may determine a maximum identifier value in the eighth identifier value indicating the minimum frequency separation between the STR links supported by the STR1 and the second identifier value indicating the maximum frequency separation among the minimum frequency separations between the STR links supported by the STA2 to the STA6, and determine the target frequency separation based on the maximum identifier value.

In an optional embodiment, when the first AP device determines the target frequency separation based on the at least one piece of first indication information, the target frequency separation may be determined according to a maximum identifier value among second identifier value included in second indication information sent by all STA devices associated with the first AP device in the OBSS.

Assuming that the maximum identifier value among the second first identifier values included in the first indication information sent by all STA devices associated with the first AP device in the OBSS is k, the target frequency separation is (k - 1) * 80 MHz.

As an example, the AP1 and the AP2 form the OBSS. The OBSS includes the STA1 to the STA6. The AP1 is associated with the STA1 to the STA3 in the OBSS, and the AP2 is associated with the STA4 to the STA6 in the OBSS.

The STA1 to the STA3 send the first indication information to the AP1. The first indication information sent by each STA device includes a second identifier value indicating the maximum frequency separation among the minimum frequency separations between STR links supported by all STA devices from the STA1 to the STA6 other than itself, for example, the second identifier value included in the first indication information sent by the STA1 indicates the maximum frequency separation among the minimum frequency separations between the STR links supported by the STA2 to the STA6.

In this case, a maximum identifier value among all second identifier values in the first indication information sent by the STA1 to the STA3 to the AP1 must match the maximum identifier value of the minimum frequency separations between STR links supported by each STA device from the STA1 to the STA6. Therefore, the AP1 may determine the maximum identifier value among all second identifier values in the first indication information sent by the STA1-STA3 to the AP1, and determine the target frequency separation based on the maximum identifier value.

In the communication method applied to the first AP device in the present disclosure, the first indication information sent by each STA device associated with the first AP device in the OBSS includes at least one third identifier value, in which each third identifier value indicates a minimum frequency separation between STR links supported by all STA device in the OBSS.

In an optional embodiment, when the first AP device determines the target frequency separation based on the at least one piece of first indication information, the target frequency separation may be determined according to a maximum identifier value among all third identifier values included in first indication information sent by any STA device.

Assuming that the maximum identifier value among the third identifier values included in the first indication information sent by any STA device is k, the target frequency separation is (k - 1) * 80 MHz.

As an example, the AP1 and the AP2 form the OBSS. The OBSS includes the STA1 to the STA6. The AP1 is associated with the STA1 to the STA3 in the OBSS, and the AP2 is associated with the STA4 to the STA6 in the OBSS.

The STA1 to the STA3 send the first indication information to the AP1. The first indication information sent by each STA device includes a third identifier value indicating a minimum frequency separation between STR links supported by the each STA device from the STA1 to the STA6.

Taking the STA1 as an example, the first indication information sent by the STA1 includes a plurality of third identifier values. Each third identifier value indicates a minimum frequency separation between STR links supported by one STA device from the STA1 to the STA6.

The AP1 may determine a maximum identifier value among all third identifier values included in any one piece of first indication information, and determine the target frequency separation based on the maximum identifier value.

In the communication method applied to the first AP device in the present disclosure, the first indication information sent by each STA device associated with the first AP device in the OBSS includes at least one fourth identifier value. Each second identifier value indicates a maximum frequency separation among minimum frequency separations between STR links supported by all STA devices in the OBSS.

In an optional embodiment, when the first AP device determines the target frequency separation based on the at least one piece of first indication information, the target frequency separation may be determined according to the fourth identifier value included in any first indication information.

Assuming that a fourth identifier value included in any first indication information is k, the target frequency separation is (k - 1) * 80 MHz.

As an example, the AP1 and the AP2 form the OBSS. The OBSS includes the STA1 to the STA6. The AP1 is associated with the STA1 to the STA3 in the OBSS, and the AP2 is associated with the STA4 to the STA6 in the OBSS.

The STA1 to the STA3 send the first indication information to the AP1. The first indication information sent by each STA device includes a fourth identifier value indicating the maximum frequency separation among the minimum frequency separations between the STR links supported by all STA devices from the STA1 to the STA6.

Taking the STA1 as the second STA device as an example, the first indication information sent by the STA1 includes the fourth identifier value. The fourth identifier value indicates a maximum frequency separation among minimum frequency separations between STR links supported by the STA1 to the STA6. The AP1 may determine the target frequency separation based on the fourth identifier value included in any first indication information.

In the communication method applied to the first AP device in the present disclosure, when the target frequency separation is determined, at least one piece of second indication information sent by at least one second AP device may be received, and the target frequency separation is determined according to the at least one piece of second indication information.

Each second AP device is any AP device other than the first AP device among all AP devices corresponding to the OBSS. The second indication information sent by each second AP device includes at least one of:
at least one fifth identifier value, in which each fifth identifier value indicates a minimum frequency separation between STR links supported by one STA device associated with the second AP device in the OBSS; or
**a** sixth identifier value, in which the sixth identifier value indicates a maximum frequency separation among minimum frequency separations between STR links supported by all STA devices associated with the second AP device in the OBSS.

The first AP device may also determine the maximum frequency separation among the minimum frequency separations between the STR links supported by all STA devices in the OBSS based on the second indication information sent by the at least one second AP device, and the minimum frequency separation between the STR links supported by each STA device associated with the first AP device in the OBSS.

If any of above identifier values is a non-zero integer, assuming that the identifier value is n, a corresponding indicated frequency separation is (n - 1) * 80 MHz.

If a fifth identifier value is 3, a minimum frequency separation indicated by the fifth identifier value is (3 - 1) * 80 MHz = 160 MHz. If a sixth identifier value is 4, a maximum frequency separation indicated by the sixth identifier value is (4 - 1) * 80 MHz = 240 MHz.

In the communication method applied to the first AP device in the present disclosure, the second indication information sent by each second AP device includes at least one fifth identifier value. Each fifth identifier value indicates the minimum frequency separation between the STR links supported by the one STA device associated with the second AP device in the OBSS.

In an optional embodiment, when the first AP device determines the target frequency separation based on the at least one piece of second indication information, the target frequency separation may be determined according to a maximum identifier value among all fifth identifier values included in the second indication information sent by all second AP devices and at least one ninth identifier value.

Each ninth identifier value indicates a minimum frequency separation between STR links supported by one STA device associated with the first AP device in the OBSS.

In the process of establishing the association with the first AP device, each STA device associated with the firstAP device in the OBSS sends a message frame to the first AP device, which includes a multi-link information element. The multi-link information element includes a Frequency Separation For STR information field, and the Frequency Separation For STR information field includes an identifier value indicating a minimum frequency separation between STR links supported by the STA device.

For each second AP device, in a process of establishing the association with the second AP device, each STA device associated with the second AP device in the OBSS sends a message frame to the second AP device, which includes a multi-link information element. The multi-link information element includes a Frequency Separation For STR information field, and the Frequency Separation For STR information field includes an identifier value indicating a minimum frequency separation between STR links supported by the each STA device, so that each second AP device may determine an identifier value (i.e., a fifth identifier value) indicating the minimum frequency separation between the STR links supported by each associated STA device in the OBSS.

Assuming that the maximum identifier value among all fifth identifier values included in the second indication information sent by the second STA device and all ninth identifier values is k, the target frequency separation is (k - 1) * 80 MHz.

As an example, the AP1 and the AP2 form the OBSS. The OBSS includes the STA1 to the STA6. The AP1 is associated with the STA1 to the STA3 in the OBSS, and the AP2 is associated with the STA4 to the STA6 in the OBSS.

The AP2 sends the second indication information to the AP1, in which the second indication information includes fifth identifier values indicating the minimum frequency separations between the STR links supported by each STA device from the STA4 to the STA6.

The AP1 may determine a maximum identifier value among ninth identifier values indicating the minimum frequency separations between the STR links supported by all STA device from the STA1 to the STA3 and all fifth identifier values, and determine the target frequency separation based on the maximum identifier value.

In the communication method applied to the first AP device in the present disclosure, the second indication information sent by each second STA device includes a sixth identifier value. The sixth identifier value indicates the maximum frequency separation among the minimum frequency separations between the STR links supported by all STA devices associated with the second AP device in the OBSS.

In an optional embodiment, when the first AP device determines the target frequency separation based on the at least one piece of second indication information, the target frequency separation may be determined according to a maximum identifier value in sixth identifier values included in the second indication information sent by all second AP devices and the at least one ninth identifier value.

Each ninth identifier value indicates a minimum frequency separation between STR links supported by one STA device associated with the first AP device in the OBSS.

In the process of establishing the association with the first AP device, each STA device associated with the firstAP device in the OBSS sends a message frame to the first AP device, which includes a multi-link information element. The multi-link information element includes a Frequency Separation For STR information field, and the Frequency Separation For STR information field includes an identifier value indicating a minimum frequency separation between STR links supported by the STA device.

For each second AP device, each STA device associated with the second AP device in the OBSS sends a message frame to the second AP device in the process of establishing the association with the second AP device, which includes a multi-link information element. The multi-link information element includes a Frequency Separation For STR information field, and the Frequency Separation For STR information field includes an identifier value indicating a minimum frequency separation between STR links supported by the STA device, so that the second AP device may determine an identifier value (i.e., a sixth identifier value) indicating the maximum frequency separation among the minimum frequency separations between the STR links supported by each STA device associated with the second AP device in the OBSS.

Assuming that the maximum identifier value among the sixth identifier value included in the second indication information sent by all second AP devices and all ninth identifier values is k, the target frequency separation is (k - 1) * 80 MHz.

As an example, the AP1 and the AP2 form the OBSS. The OBSS includes the STA1 to the STA6. The AP1 is associated with the STA1 to the STA3 in the OBSS, and the AP2 is associated with the STA4 to the STA6 in the OBSS.

The AP2 sends the second indication information to the AP1, in which the second indication information includes a sixth identifier value indicating the maximum frequency separation among the minimum frequency separations between the STR links supported by all STA devices from the STA4 to the STA6.

The AP1 may determine the maximum identifier value among the ninth identifier values indicating the minimum frequency separations between the STR links supported by each STA device from the STA1 to the STA3 and all sixth identifier values, and determine the target frequency separation based on the maximum identifier value.

In the communication method applied to the first AP device in the present disclosure, the second indication information sent by each second AP device includes a plurality of identifier values indicating the minimum frequency separations between the STR links supported by each STA device in the OBSS.

In an optional embodiment, when the first AP device determines the target frequency separation based on the at least one piece of second indication information, the target frequency separation may be determined according to a maximum identifier value in all identifier values included in second indication information sent by any second AP device.

Assuming that the maximum identifier value in all identifier values included in any piece of second indication information is k, the target frequency separation is (k - 1) * 80 MHz.

As an example, the AP1 and the AP2 form the OBSS. The OBSS includes the STA1 to the STA6. The AP1 is associated with the STA1 to the STA3 in the OBSS, and the AP2 is associated with the STA4 to the STA6 in the OBSS.

The AP2 sends the second indication information to the AP1, in which the second indication information includes an identifier value indicating the minimum frequency separation between the STR links supported by each STA device from the STA1 to the STA6.

The AP1 may determine a maximum identifier value among all identifier values included in the second indication information, and determine the target frequency separation based on the maximum identifier value.

In the communication method applied to the first AP device in the present disclosure, the second indication information sent by each second AP device includes an identifier value indicating the maximum frequency separation among the minimum frequency separations between the STR links supported by all STA devices in the OBSS.

In an optional embodiment, when the first AP device determines the target frequency separation based on the at least one piece of second indication information, the target frequency separation may be determined according to the identifier values included in the second indication information sent by any second AP device.

Assuming that the identifier value included in any piece of second indication information is k, the target frequency separation is (k - 1) * 80 MHz.

As an example, the AP1 and the AP2 form the OBSS. The OBSS includes the STA1 to the STA6. The AP1 is associated with the STA1 to the STA3 in the OBSS, and the AP2 is associated with the STA4 to the STA6 in the OBSS.

The AP2 sends the second indication information to the AP1, in which the second indication information includes the identifier value indicating the maximum frequency separation among the minimum frequency separations between the STR links supported by all STA devices from the STA1 to the STA6.

The AP1 may determine the target identifier value according to the identifier values included in the second indication information.

In the communication method applied to the first AP device in the present disclosure, the method further includes:
broadcasting a first message frame to all STA devices in the OBSS, in which the first message frame includes at least one of:
at least one ninth identifier value, in which each ninth identifier value indicates a minimum frequency separation between STR links supported by one STA device associated with the first AP device in the OBSS; or
a tenth identifier value, in which the tenth identifier value indicates a maximum frequency separation among minimum frequency separations between STR links supported by all STA devices associated with the first AP device in the OBSS.

Based on above implementations, each STA device in the OBSS may receive the first information frame sent by all AP devices corresponding to the OBSS, and then determine the minimum frequency separations between the STR links supported by the STA devices associated with each AP device in the OBSS, and/or the maximum frequency separation among the minimum frequency separations between the STR links supported by all STA devices associated with the each AP in the OBSS. Moreover, each STA device in the OBSS may also receive third indication information sent by other STA devices in the OBSS, including a minimum frequency separation between STR links supported by a STA device that sends the third indication information, so that each STA device in the OBSS may send the first indication information to the associated AP device based on at least one piece of above information.

Meanwhile, for each second AP device, the second AP device may send the second indication information to the first AP device and other second AP devices based on at least one of: the first indication information sent by the STA device associated with the second AP device in the OBSS, an identifier value of the Frequency Separation For STR information field carried in a message frame sent by the STA device associated with the second AP device in the OBSS in a process of establishing an association with the second AP device, and second support information sent by other AP devices to the second AP device.

In the communication method applied to the first AP device in the present disclosure, the first message frame broadcast by any AP device to all STA devices in the OBSS is a beacon frame.

The embodiments of the present disclosure provide a communication method, applied to a third STA device. For details, please refer to FIG. 5, which is another flowchart of a communication method according to the embodiments of the present disclosure.

Optionally, the method may include S51.

At S51, first indication information is sent, in which the first indication information is used for enabling an associated AP device to determine a target frequency separation according to the first indication information and to communicate with at least one associated STA device in an OBSS according to the target frequency separation, the target frequency separation is a maximum frequency separation among minimum frequency separations between STR links supported by each STA device in the OBSS, the OBSS is an overlapping part of BSSs formed by at least one AP device in a sub-7 GHz frequency band, the third STA device is any STA device in the OBSS, and a minimum frequency separation between communication links of any two STA devices in the OBSS when communicating with associated AP device(s) is greater than or equal to the target frequency separation.

Any STA device in the OBSS may send the first indication information to the associated AP device, so that the associated AP device may determine the target frequency separation according to the at least one piece of first indication information, and communicate with any one or more associated STA devices in the OBSS according to the target frequency separation. In this case, each AP device corresponding to the OBSS may determine the target frequency separation based on a same method and communicate with any one or more associated STA devices in the OBSS according to the target frequency separation, thereby ensuring that the minimum frequency separation between the communication links of any two STA devices in the OBSS when communicating with associated AP device(s) is greater than or equal to the target frequency separation, which effectively reduces inter-link interference.

Optionally, the communication links of any two STA devices in the OBSS when communicating with the associated AP device(s) may be STR links with each other. That is, any two communication links form a STR link pair. When one STA device in the OBSS sends a frame to its associated AP device on one of the two communication links, the other STA device in the OBSS may receive a frame from its associated AP device on the other communication link.

In the communication method applied to the third STA device in the present disclosure, the first indication information includes at least one of:
at least one first identifier value, in which each first identifier value indicates a minimum frequency separation between STR links supported by one STA device in the OBSS other than the third STA device;
a second identifier value, in which the second identifier value indicates a maximum frequency separation among minimum frequency separations between STR links supported by all STA devices in the OBSS other than the STA device;
at least one third identifier value, in which each third identifier value indicates a minimum frequency separation between STR links supported by each STA device in the OBSS; or
a fourth identifier value, in which the fourth identifier value indicates a maximum frequency separation among minimum frequency separations between STR links supported by all STA devices in the OBSS.

After the third STA device sends the first indication information to a third AP device, the third AP device, based on the first indication information sent by one or more STA devices associated with the third AP device in the OBSS, determines the maximum frequency separation among the minimum frequency separations between the STR links supported by all STA devices in the OBSS, and determines the maximum frequency separation as the target frequency separation.

After the third STA device sends the first indication information to the third AP device, the third AP device, based on the first indication information sent by one or more STA devices associated with the third AP device in the OBSS and minimum frequency separations between STR links supported by each STA device associated with the third AP device in the OBSS, determines the maximum frequency separation among the minimum frequency separations between the STR links supported by all STA devices in the OBSS.

The third AP device is an AP associated with the third STA device.

If any of above identifier values is a non-zero integer, assuming that an identifier value is n, a corresponding indicated frequency separation is (n-1) * 80 MHz.

If a first identifier value is 3, a minimum frequency separation indicated by the first identifier value is (3-1) * 80 MHz = 160 MHz. If a second identifier value is 4, a maximum frequency separation indicated by the second identifier value is (4 - 1) * 80 MHz = 240 MHz.

In the communication method applied to the third STA device in the present disclosure, an implementation of the third AP device to determine the target frequency separation according to the at least one indication information is shown in the communication method applied to the first AP device, which is not repeated here.

The third AP device is an AP device associated with the third STA device.

In an optional embodiment, the first indication information sent by the third STA device includes at least one first identifier value. Each first identifier value indicates a minimum frequency separation between STR links supported by all STA devices in the OBSS other than the third STA device.

After the third STA device sends the first indication information, the third AP device may determine the target frequency separation based on the maximum identifier value among all first identifier values included in the first indication information sent by the third STA device and an identifier value indicating a minimum frequency separation between STR links supported by the third STA device.

The identifier value indicating the minimum frequency separation between the STR links supported by the third STA device is sent by the third STA device to the third AP device in a process of establishing an association with the third AP device.

In the process of establishing the association with the third AP device, the third STA device sends a message frame to the third AP device, which includes a multi-link information element. The multi-link information element includes a Frequency Separation For STR information field, and the Frequency Separation for STR information field includes the identifier value indicating the minimum frequency separation between the STR links supported by the third STA device.

Assuming that the maximum identifier value among all first identifier values included in the first indication information sent by the third STA device and the identifier value indicating the minimum frequency separation between the STR links supported by the third STA device is k, the target frequency separation is (k-1) * 80 MHz.

As an example, the AP1 and the AP2 form the OBSS. The OBSS includes the STA1 to the STA6. The AP1 is associated with the STA1 to the STA3 in the OBSS, and the AP2 is associated with the STA4 to the STA6 in the OBSS.

The STA6 sends first indication information to the AP2. The first indication information includes first identifier values indicating the minimum frequency separation between the STR links supported by each STA device from the STA1 to the STA5.

The AP2 may determine a maximum identifier value among the first identifier values indicating the minimum frequency separations between the STR links supported by each STA device from the STA1 to the STA5 and an identifier value indicating a minimum frequency separation between STR links supported by the STA6, and determine the target frequency separation according to the maximum identifier value.

In an optional embodiment, the first indication information sent by the third STA device includes the second identifier value, in which the second identifier value indicates the maximum frequency separation among the minimum frequency separations between the STR links supported by all STA devices in the OBSS other than the third STA device.

After the third STA device sends the first indication information, the third AP device may determine the target frequency separation based on a maximum identifier value in the second identifier value included in the first indication information sent by the third STA device and the identifier value indicating the minimum frequency separation between the STR links supported by the third STA device.

The identifier value indicating the minimum frequency separation between the STR links supported by the third STA device is sent by the third STA device to the third AP device in a process of establishing an association with the third AP device.

In the process of establishing the association with the third AP device, the third STA device sends a message frame to the third AP device, which includes a multi-link information element. The multi-link information element includes a Frequency Separation For STR information field, and the Frequency Separation For STR information field includes an identifier value indicating the minimum frequency separation between the STR links supported by the third STA device.

Assuming that the maximum identifier value in the second identifier value included in the first indication information sent by the third STA device and the minimum frequency separation between the STR links supported by the third STA device is k, the target frequency separation is (k-1) * 80 MHz.

As an example, the AP1 and the AP2 form the OBSS. The OBSS includes the STA1 to the STA6. The AP1 is associated with the STA1 to the STA3 in the OBSS, and the AP2 is associated with the STA4 to the STA6 in the OBSS.

The STA6 sends the first indication information to the AP2. The first indication information includes the second identifier value indicating the maximum frequency separation among the minimum frequency separations between the STR links supported by each STA device from the STA1 to the STA5.

The AP2 may determine the maximum identifier value in the second identifier value and the identifier value the minimum frequency separation between the STR links supported by the STA6, and determine the target frequency separation according to the maximum identifier value.

In the communication method applied to the third STA device in the present disclosure, the method further includes:
receiving third indication information sent by each STA device in the OBSS other than the third STA device,
in which the third indication information sent by each STA device other than the third STA device includes an eleventh identifier value, and the eleventh identifier value indicates a minimum frequency separation between STR links supported by the STA device.

Based on this, the third STA device may send the first indication information to the third AP device.

The third AP device is an AP device associated with the third STA device.

In the communication method applied to the third STA device in the present disclosure, the method further includes:
receiving a first message frame broadcast by the at least one AP device corresponding to the OBSS, in which the first message frame broadcast by each AP device includes at least one of:
at least one twelfth identifier value, in which each twelfth identifier value indicates a minimum frequency separation between STR links supported by one OBSS associated with the AP device in the OBSS; or
a thirteenth identifier value, in which the thirteenth identifier value indicates a maximum frequency separation among minimum frequency separations between the STR links supported by all STA devices associated with the AP device in the OBSS.

The third STA device sends the first indication information to the third AP device based on received first message frames sent by each AP.

The third AP device is an AP device associated with the third STA device.

In the communication method applied to the third STA device in the present disclosure, the method further includes:
sending the third indication information to each STA device in the OBSS other than the third STA device,
in which the third indication information sent by the third STA device indicates the identifier value indicating the minimum frequency separation between the STR links supported by the third STA device, so that each other STA device in the OBSS sends the first indication information to its associated AP device based on each third indication information received.

In the communication method applied to the first AP device or the third STA device in the present disclosure, any STA device in the OBSS sends a message frame to the associated AP device in a process of establishing an association with the associated AP device. The message frame includes a multi-link information element. The multi-link information element includes a Frequency Separation For STR information field, and the Frequency Separation For STR information field includes the identifier value indicating the minimum frequency separations between the STR links supported by the STA device.

In the embodiments of the present disclosure, any AP device corresponding to the OBSS may determine the maximum frequency separation among the minimum frequency separations between the STR links supported by each STA device in the OBSS based on first indication information sent by its associated STA devices in the OBSS and/or second indication information sent by other AP devices corresponding to the OBSS, thereby ensuring that the minimum frequency separation between the communication links of any two STA devices in the OBSS when communicating with the associated AP device is greater than or equal to the target frequency separation, which effectively reduces inter-link interference.

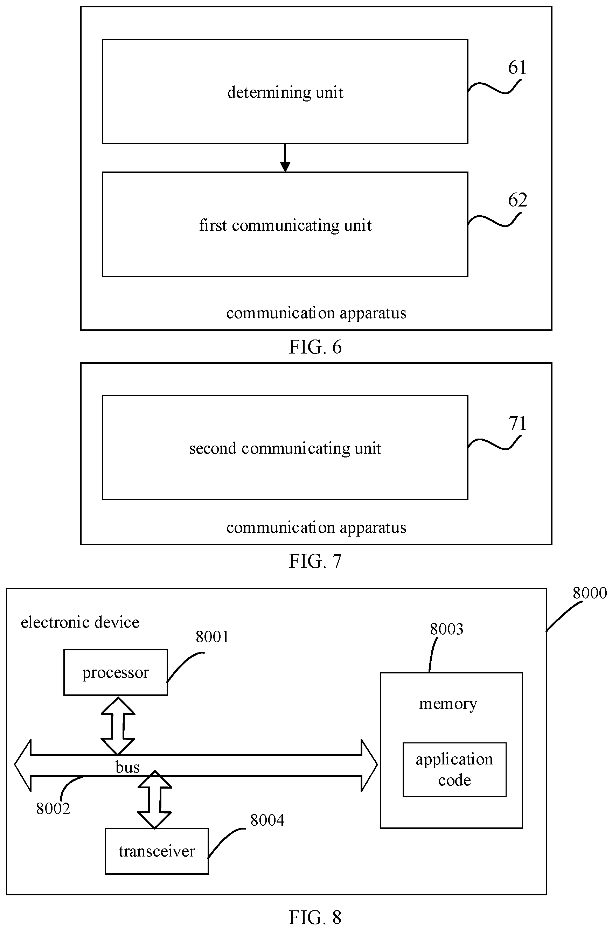

As shown in FIG. 6, the embodiments of the present disclosure provide a communication apparatus, including:
a determining unit 61, configured to determine a target frequency separation, in which the target frequency separation is a maximum frequency separation among minimum frequency separations between STR links supported by each STA device in an OBSS, the OBSS is an overlapping part of BSSs formed by at least one AP device in a sub-7 GHz frequency band, and the first AP device is any one of the at least one AP device; and
a first communicating unit 62, configured to communicate with at least one STA device in the OBSS according to the target frequency separation, in which a minimum frequency separation between communication links of any two STA devices in the OBSS when communicating with an associated AP device is greater than or equal to the target frequency separation.

Optionally, in the embodiments of the present disclosure, determining the target frequency separation includes at least one of:
receiving at least one piece of first indication information sent by the at least one STA device associated with the first AP device in the OBSS, and determining the target frequency separation according to the at least one piece of first indication information; or
receiving at least one piece of second indication information sent by at least one second AP device, and determining the target frequency separation according to the at least one piece of second indication information, in which each second AP device is any one of the at least one AP device other than the first AP device,
in which first indication information sent by each STA device associated with the first AP device in the OBSS includes at least one of:
at least one first identifier value, in which each first identifier value indicates a minimum frequency separation between STR links supported by one STA device in the OBSS other than the STA device;
a second identifier value, in which the second identifier value indicates a maximum frequency separation among minimum frequency separations between STR links supported by all STA devices in the OBSS other than the STA device;
at least one third identifier value, in which each third identifier value indicates a minimum frequency separation between STR links supported by each STA device in the OBSS; or
a fourth identifier value, in which the fourth identifier value indicates a maximum frequency separation among minimum frequency separations between STR links supported by all STA devices in the OBSS,
in which the second indication information sent by each second AP device includes at least one of:
   at least one fifth identifier value, in which each fifth identifier value indicates a minimum frequency separation between STR links supported by one STA device associated with the second AP device in the OBSS; or
   a sixth identifier value, in which the sixth identifier value indicates a maximum frequency separation among minimum frequency separations between STR links supported by all STA devices associated with the second AP device in the OBSS.

Optionally, in the embodiments of the present disclosure, the first indication information sent by the each STA device associated with the first AP device in the OBSS includes at least one first identifier value.

The determining unit 61 is used to perform at least one of:
determining the target frequency separation according to a maximum identifier value among all first identifier values included in the first indication information sent by a first STA device and a seventh identifier value, in which the seventh identifier value indicates a minimum frequency separation between STR links supported by the first STA device, the first STA device is any STA device associated with the first AP device in the OBSS, and the seventh identifier value is sent by the first STA device to the first AP device in a process of establishing an association with the first AP device; or
determining the target frequency separation according to a maximum identifier value among all first identifier values included in the first indication information sent by all STA devices associated with the first AP device in the OBSS.

Optionally, in the embodiments of the present disclosure, the first indication information sent by the each STA device associated with the first AP device in the OBSS includes the second identifier value.

The determining unit 61 is used to perform at least one of:
determining the target frequency separation according to a maximum identifier value in the second identifier value included in the first indication information sent by a second STA device and an eighth identifier value, in which the eighth identifier value indicates a minimum frequency separation between STR links supported by the second STA device, the second STA device is any STA device associated with the first AP device in the OBSS, and the eighth identifier value is sent by the second STA device to the first AP device in a process of establishing an association with the first AP device; or
determining the target frequency separation according to a maximum identifier value among all second identifier values included in the first indication information sent by all STA devices associated with the first AP device in the OBSS.

Optionally, in the embodiments of the present disclosure, the first indication information sent by each STA device associated with the first AP device in the OBSS includes at least one third identifier value.

The determining unit 61 is configured to:
determine the target frequency separation according to a maximum identifier value among all third identifier values included in any one piece of first indication information.

Optionally, in the embodiments of the present disclosure, the first indication information sent by each STA device associated with the first AP device in the OBSS includes the fourth identifier value.

The determining unit 61 is configured to:
determine the target frequency separation according to the fourth identifier value included in any one piece of first indication information.

Optionally, in the embodiments of the present disclosure, the second indication information sent by each second AP device includes at least one fifth identifier value.

The determining unit 61 is configured to:
determine the target frequency separation according to a maximum identifier value among all fifth identifier values included in the second indication information sent by all second AP devices and at least one ninth identifier value, in which each ninth identifier value indicates a minimum frequency separation between STR links supported by one STA device associated with the first AP device in the OBSS and each ninth identifier value is sent by a corresponding STA device to the second AP device in a process of establishing an association with the second AP device.

Optionally, in the embodiments of the present disclosure, the second indication information sent by each second AP device includes the sixth identifier value.

The determining unit 61 is configured to:
determine the target frequency separation according to a maximum identifier value among the sixth identifier value included in the second indication information sent by all second AP devices and at least one ninth identifier value, in which each ninth identifier value indicates a minimum frequency separation between STR links supported by one STA device associated with the first AP device in the OBSS and each ninth identifier value is sent by a corresponding STA device to the second AP device in a process of establishing an association with the second AP device.

Optionally, in the embodiments of the present disclosure, the first communicating unit 62 is further configured to:
broadcast a first message frame to all STA devices in the OBSS, in which the first message frame includes at least one of:
at least one ninth identifier value, in which each ninth identifier value indicates a minimum frequency separation between STR links supported by one STA device associated with the first AP device in the OBSS; or
a tenth identifier value, in which the tenth identifier value indicates a maximum frequency separation among minimum frequency separations between STR links supported by all STA devices associated with the first AP device in the OBSS.

Optionally, in the embodiments of the present disclosure, the first message frame is a beacon frame.

As shown in FIG. 7, the embodiments of the present disclosure provide a communication apparatus, including:
a second communicating unit 71, configured to send first indication information, in which the first indication information is used for enabling an associated AP device to determine a target frequency separation according to the first indication information and to communicate with at least one associated STA device in an OBSS according to the target frequency separation, the target frequency separation is a maximum frequency separation among minimum frequency separations between STR links supported by each STA device in the OBSS, the OBSS is an overlapping part of BSSs formed by at least one AP device in a sub-7 GHz frequency band, the third STA device is any STA device in the OBSS, and a minimum frequency separation between communication links of any two STA devices in the OBSS when communicating with associated AP device(s) is greater than or equal to the target frequency separation.

Optionally, in the embodiments of the present disclosure, the second communicating unit 71 is used to perform at least one of:
at least one first identifier value, in which each first identifier value indicates a minimum frequency separation between STR links supported by one STA device in the OBSS other than the STA device;
a second identifier value, in which the second identifier value indicates a maximum frequency separation among minimum frequency separations between STR links supported by all STA devices in the OBSS other than the STA device;
at least one third identifier value, in which each third identifier value indicates a minimum frequency separation between STR links supported by each STA device in the OBSS; or
a fourth identifier value, in which the fourth identifier value indicates a maximum frequency separation among minimum frequency separations between STR links supported by all STA devices in the OBSS.

Optionally, in the embodiments of the present disclosure, the second communicating unit 71 is further configured to:
receive third indication information sent by each STA device in the OBSS other than the third STA device, in which the third indication information sent by each STA device other than the third STA device includes an eleventh identifier value, and the eleventh identifier value indicates a minimum frequency separation between STR links supported by the STA device.

Optionally, in the embodiments of the present disclosure, the second communicating unit 71 is further configured to:
receive a first message frame broadcast by the at least one AP device corresponding to the OBSS, in which the first message frame broadcast by each AP device includes at least one of:
at least one twelfth identifier value, in which each twelfth identifier value indicates a minimum frequency separation between STR links supported by one STA device associated with the AP device in the OBSS; or
a thirteenth identifier value, in which the thirteenth identifier value indicates a maximum frequency separation among minimum frequency separations between STR links supported by all STA devices associated with the AP device in the OBSS.

The embodiments of the present disclosure also provide an electronic device. As shown in FIG. 8, the electronic device 8000 shown in FIG. 8 includes: a processor 8001 and a memory 8003. The processor 8001 is connected to the memory 8003, for example, via a bus 8002. Optionally, the electronic device 8000 may further include a transceiver 8004. It should be noted that there may be more than one transceiver 8004 in a practical application, and a structure of the electronic device 8000 is not limited by the embodiments of the present disclosure.

The memory 8003 is configured to store application code for executing the embodiments of the present disclosure and is controlled and executed by the processor 8001. When the electronic device 8000 serves as a first AP device, the processor 8001 is configured to execute the application code stored in the memory 8003 to implement the communication method applied to the firstAP device in this solution. When the electronic device 8000 serves as a third STA device, the processor 8001 is configured to execute the application code stored in the memory 8003 to implement the communication method applied to the third STA device in this solution.

The bus 8002 may include a pathway for transmitting information among above components. The bus 8002 may be a peripheral component interconnect (PCI) bus, an extended industry standard architecture (EISA) bus, or the like. The bus 8002 may be divided into an address bus, a data bus, a control bus, and the like. For ease of description, in FIG. 8, the bus 8002 is shown as one thick line, which does not mean there is only one bus or one type of bus.

The memory 8003 may be a read-only memory (ROM) or other type of static storage device capable of storing static information and instructions, a random access memory (RAM) or other type of dynamic storage device capable of storing information and instructions, an electrically erasable programmable read-only memory (EEPROM), a compact disc read-only memory (CD-ROM), other optical disc storage (including a compressed disc, a laser disc, an optical disc, a digital versatile disc, a blu-ray disc, etc.), a magnetic disk storage medium, other magnetic storage devices, or any other medium capable of carrying or storing program code in a form of instructions or data structures and accessible by a computer, but is not limited thereto.

The embodiments of the present disclosure provide a computer readable storage medium. The computer readable storage medium stores a computer program. When the computer program is executed on a computer, the computer is caused to perform corresponding content in above method embodiments.

It may be understood that although steps in flowcharts of accompanying drawings are displayed in order indicated by arrows, these steps are not necessarily executed in the order indicated by the arrows. Unless explicitly stated herein, there are no strict sequential constraints on execution of these steps, and they may be executed in another order. Moreover, at least some of the steps in the flowcharts of the accompanying drawings may include a plurality of sub-steps or stages, which are not necessarily executed at a same time but may be executed at different times. An execution order is not necessarily sequential, but may alternate with other steps or at least some of the sub-steps or stages of other steps.

It should be noted that above computer readable storage medium in the present disclosure may be a computer readable signal medium, a computer readable storage medium, or any combination of them. The computer readable storage medium may be, but is not limited to, an electrical, a magnetic, an optical, an electromagnetic, an infrared, or a semiconductor system, apparatus, or device, or any combination of them. More specific examples of computer readable storage media may include, but are not limited to: an electrical connection with one or more wires, a portable computer disk, a hard disk, a RAM, a ROM, an erasable programmable read-only memory (EPROM or flash memory), an optical fiber, a portable CD-ROM, an optical storage device, a magnetic storage device, or any suitable combination of them. In the present disclosure, the computer readable storage medium may be any tangible medium that includes or stores a program which may be used by or in connection with a system, an apparatus, or a component for executing instructions. In the present disclosure, the computer readable signal medium may include a data signal propagated in a baseband or as a part of a carrier wave, in which computer readable program code is carried. A propagated data signal may take various forms, including but not limited to an electromagnetic signal, an optical signal, or any suitable combination of them. The computer readable signal medium may also be any computer readable storage medium other than a computer readable storage medium, which may transmit, propagate, or transmit a program which may be used by or in connection with the system, the apparatus, or the device for executing the instructions. The program code carried on the computer readable storage medium may be transmitted using any appropriate medium, including but is not limited to: a wire, an optical cable, a radio frequency (RF), or any suitable combination of them.

The above computer readable storage medium may be included in the first AP device or the third STA device, or may also exist independently without being installed in the first AP device or the third STA device.

The above computer readable storage medium carries one or more programs. When the one or more programs are executed by the first AP device or the third STA device, the first AP device or the third STA device is caused to implement a corresponding communication method.

According to one aspect of the present disclosure, a computer program product or a computer program is provided. The computer program product or the computer program includes computer instructions stored in the computer readable storage medium. A processor of a computer reads the computer instructions from the computer readable storage medium and executes the computer instructions, so that the computer may implement the communication method in above various optional implementations.

A computer program code for executing operations of the present disclosure may be written in one or more programming languages or a combination of them. These programming languages include an object-oriented programming language such as Java, Smalltalk, and C++, and a conventional procedural programming language such as a "C" language or a similar programming language. The program code may be executed entirely on a user computer, partly on a user computer, as a dependent software package, partly on a user computer and partly on a remote computer, or entirely on a remote computer or a server. In a scenario involving the remote computer, the remote computer may be connected to the user computer via any type of network, including a local area network (LAN) or a wide area network (WAN), or to an external computer (e.g., via an Internet using an Internet service provider).

The flowcharts and block diagrams in the accompanying drawings show an architecture, a function, and an operation of possible implementations of the system, the method, and the computer program product according to various embodiments of the present disclosure. In this regard, each block in the flowchart or the block diagram may represent a module, a program segment, or a part of the code that includes one or more executable instructions for implementing a specified logical function. It also needs to be noted that, in some optional implementations, the functions noted in the blocks may occur differently from an order noted in the drawings. For example, two blocks shown in succession may, in fact, be executed concurrently, or the blocks may sometimes be executed in a reverse order, depending on a function involved. It also needs to be noted that each block of the block diagrams and/or the flowcharts, and a combination of the blocks in the block diagrams and/or the flowcharts, may be implemented by a special-purpose hardware-based system that performs a specified function or operation, or by a combination of special-purpose hardware and computer instructions.

The modules in the embodiments of the present disclosure may be implemented in software or hardware. A name of the module does not, in some cases, constitute a limitation on the module itself. For example, A module may also be described as "A module for performing a B operation".

The above description is merely a preferred embodiment of the present disclosure and an explanation of the technical principles applied. Those skilled in the art should understand that a scope of the present disclosure is not limited to a technical solution formed by a specific combination of above technical features, but also includes other technical solutions formed by any combination of the above technical features or their equivalent features without departing from the principle of the present disclosure. For example, a technical solution formed by replacing above features with technical features, including (but are not limited to) those having similar functions, disclosed in the present disclosure.

## Claims

1. A communication method, applied to a first access point (AP) device, comprising:
determining a target frequency separation, wherein the target frequency separation is a maximum frequency separation among minimum frequency separations between simultaneously transmit and receive (STR) links supported by each station (STA) device in an overlapping basic service set (OBSS), the OBSS is an overlapping part of basic service sets (BSSs) formed by at least one AP device in a sub-7 GHz frequency band, and the first AP device is any one of the at least one AP device; and
communicating with at least one STA device in the OBSS according to the target frequency separation, wherein a minimum frequency separation between communication links of any two STA devices in the OBSS when communicating with an associated AP device is greater than or equal to the target frequency separation.

2. The method of claim 1, wherein determining the target frequency separation comprises at least one of:
receiving at least one piece of first indication information sent by the at least one STA device associated with the first AP device in the OBSS, and determining the target frequency separation according to the at least one piece of first indication information; or
receiving at least one piece of second indication information sent by at least one second AP device, and determining the target frequency separation according to the at least one piece of second indication information, wherein each second AP device is any one of the at least one AP device other than the first AP device,
wherein the first indication information sent by each STA device associated with the first AP device in the OBSS comprises at least one of:
at least one first identifier value, wherein each first identifier value indicates a minimum frequency separation between STR links supported by one STA device in the OBSS other than the STA device;
a second identifier value, wherein the second identifier value indicates a maximum frequency separation among minimum frequency separations between STR links supported by all STA devices in the OBSS other than the STA device;
at least one third identifier value, wherein each third identifier value indicates a minimum frequency separation between STR links supported by each STA device in the OBSS; or
a fourth identifier value, wherein the fourth identifier value indicates a maximum frequency separation among minimum frequency separations between STR links supported by all STA devices in the OBSS,
wherein the second indication information sent by each second AP device comprises at least one of:
at least one fifth identifier value, wherein each fifth identifier value indicates a minimum frequency separation between STR links supported by one STA device associated with the second AP device in the OBSS; or
a sixth identifier value, wherein the sixth identifier value indicates a maximum frequency separation among minimum frequency separations between STR links supported by all STA devices associated with the second AP device in the OBSS.

3. The method of claim 2, wherein the first indication information sent by each STA device associated with the first AP device in the OBSS comprises the at least one first identifier value,
wherein determining the target frequency separation according to the at least one piece of first indication information comprises at least one of:
determining the target frequency separation according to a maximum identifier value among all first identifier values included in the first indication information sent by a first STA device and a seventh identifier value, wherein the seventh identifier value indicates a minimum frequency separation between STR links supported by the first STA device, the first STA device is any STA device associated with the first AP device in the OBSS, and the seventh identifier value is sent by the first STA device to the first AP device in a process of establishing an association with the first AP device; or
determining the target frequency separation according to a maximum identifier value among all first identifier values included in the first indication information sent by all STA devices associated with the first AP device in the OBSS.

4. The method of claim 2, wherein the first indication information sent by each STA device associated with the first AP device in the OBSS comprises the second identifier value,
wherein determining the target frequency separation according to the at least one piece of first indication information comprises at least one of:
determining the target frequency separation according to a maximum identifier value in the second identifier value included in the first indication information sent by a second STA device and an eighth identifier value, wherein the eighth identifier value indicates a minimum frequency separation between STR links supported by the second STA device, the second STA device is any STA device associated with the first AP device in the OBSS, and the eighth identifier value is sent by the second STA device to the first AP device in a process of establishing an association with the first AP device; or
determining the target frequency separation according to a maximum identifier value among all second identifier values included in the first indication information sent by all STA devices associated with the first AP device in the OBSS.

5. The method of claim 2, wherein the first indication information sent by each STA device associated with the first AP device in the OBSS comprises the at least one third identifier value,
wherein determining the target frequency separation according to the at least one piece of first indication information comprises at least one of:
determining the target frequency separation according to a maximum identifier value among all third identifier values included in any one piece of first indication information.

6. The method of claim 2, wherein the first indication information sent by each STA device associated with the first AP device in the OBSS comprises the fourth identifier value,
wherein determining the target frequency separation according to the at least one piece of first indication information comprises at least one of:
determining the target frequency separation according to the fourth identifier value included in any one piece of first indication information.

7. The method of claim 2, wherein the second indication information sent by each second AP device comprises the at least one fifth identifier value,
wherein determining the target frequency separation according to the at least one piece of second indication information comprises:
determining the target frequency separation according to a maximum identifier value among all fifth identifier values included in the second indication information sent by all second AP devices and at least one ninth identifier value, wherein each ninth identifier value indicates a minimum frequency separation between STR links supported by one STA device associated with the first AP device in the OBSS and each ninth identifier value is sent by a corresponding STA device to the second AP device in a process of establishing an association with the second AP device.

8. The method of claim 2, wherein the second indication information sent by each second AP device comprises the sixth identifier value,
wherein determining the target frequency separation according to the at least one piece of second indication information comprises:
determining the target frequency separation according to a maximum identifier value among sixth identifier values included in the second indication information sent by all second AP devices and at least one ninth identifier value, wherein each ninth identifier value indicates a minimum frequency separation between STR links supported by one STA device associated with the first AP device in the OBSS and each ninth identifier value is sent by a corresponding STA device to the second AP device in a process of establishing an association with the second AP device.

9. The method of claim 2, further comprising:
broadcasting a first message frame to all STA devices in the OBSS, wherein the first message frame comprises at least one of:
at least one ninth identifier value, wherein each ninth identifier value indicates a minimum frequency separation between STR links supported by one STA device associated with the first AP device in the OBSS; or
a tenth identifier value, wherein the tenth identifier value indicates a maximum frequency separation among minimum frequency separations between STR links supported by all STA devices associated with the first AP device in the OBSS.

10. The method of claim 9, wherein the first message frame is a beacon frame.

11. A communication method, applied to a third station (STA) device, comprising:
sending first indication information, wherein the first indication information is used for enabling an associated access point (AP) device to determine a target frequency separation according to the first indication information and to communicate with at least one STA device associated with an overlapping basic service set (OBSS) according to the target frequency separation, the target frequency separation is a maximum frequency separation among minimum frequency separations between simultaneously transmit and receive (STR) links supported by each STA device in the OBSS, the OBSS is an overlapping part of basic service sets (BSSs) formed by at least one AP device in a sub-7 GHz frequency band, the third STA device is any STA device in the OBSS, and a minimum frequency separation between communication links of any two STA devices in the OBSS when communicating with an associated AP device is greater than or equal to the target frequency separation.

12. The method of claim 11, wherein the first indication information comprises at least one of:
at least one first identifier value, wherein each first identifier value indicates a minimum frequency separation between STR links supported by one STA device in the OBSS other than the third STA device;
a second identifier value, wherein the second identifier value indicates a maximum frequency separation among minimum frequency separations between STR links supported by all STA devices in the OBSS other than the third STA device;
at least one third identifier value, wherein each third identifier value indicates a minimum frequency separation between STR links supported by each STA device in the OBSS; or
a fourth identifier value, wherein the fourth identifier value indicates a maximum frequency separation among minimum frequency separations between STR links supported by all STA devices in the OBSS.

13. The method of claim 12, further comprising:
receiving third indication information sent by each STA device in the OBSS other than the third STA device, wherein the third indication information sent by each STA device other than the third STA device comprises an eleventh identifier value, and the eleventh identifier value indicates a minimum frequency separation between STR links supported by the STA device.

14. The method of claim 12, further comprising:
receiving a first message frame broadcast by the at least one AP device corresponding to the OBSS, wherein the first message frame broadcast by each AP device comprises at least one of:
at least one twelfth identifier value, wherein each twelfth identifier value indicates a minimum frequency separation between STR links supported by one STA device associated with the AP device in the OBSS; or
a thirteenth identifier value, wherein the thirteenth identifier value indicates a maximum frequency separation among minimum frequency separations between STR links supported by all STA devices associated with the AP device in the OBSS.

15. A communication apparatus, comprising:
a determining unit, configured to determine a target frequency separation, wherein the target frequency separation is a maximum frequency separation among minimum frequency separations between simultaneous transmit and receive (STR) links supported by each station (STA) device in an overlapping basic service set (OBSS), the OBSS is an overlapping part of basic service sets (BSSs) formed by at least one AP device in a sub-7 GHz frequency band, and the first AP device is any one of the at least one AP device; and
a first communicating unit, configured to communicate with at least one STA device in the OBSS according to the target frequency separation, wherein a minimum frequency separation between communication links of any two STA devices in the OBSS when communicating with an associated AP device is greater than or equal to the target frequency separation.

16. A communication apparatus, comprising:
a second communicating unit, configured to send first indication information, wherein the first indication information is used for enabling an associated access point (AP) device to determine a target frequency separation according to the first indication information and to communicate with at least one associated STA device in an overlapping basic service set (OBSS) according to the target frequency separation, the target frequency separation is a maximum frequency separation among minimum frequency separations between simultaneous transmit and receive (STR) links supported by each STA device in the OBSS, the OBSS is an overlapping part of basic service sets (BSSs) formed by at least one AP device in a sub-7 GHz frequency band, the third STA device is any STA device in the OBSS, and a minimum frequency separation between communication links of any two STA devices in the OBSS when communicating with an associated AP device is greater than or equal to the target frequency separation.

17. An access point (AP) device, comprising a memory, a processor, and a computer program stored on the memory and executable on the processor, wherein when the program is executed by the processor, the method of any one of claims 1 to 10 is implemented.

18. A station (STA) device, comprising a memory, a processor, and a computer program stored on the memory and executable on the processor, wherein when the program is executed by the processor, the method of any one of claims 11 to 14 is implemented.

19. A computer readable storage medium for storing a computer program, wherein when the computer program is executed by a processor, the method of any one of claims 1 to 14 is implemented.
